# EUROPEAN PATENT APPLICATION

(11) **EP 4 819 249 A1**
(43) Date of publication of application: **07.10.2026**
(21) Application number: 26169436.8
(22) Date of filing: 31.03.2026
(51) Int. Cl.: H01M 4/62, H01M 10/0525

(54) **CONDUCTIVE MATERIAL DISPERSION, POSITIVE ELECTRODE MADE USING CONDUCTIVE MATERIAL, AND RECHARGEABLE LITHIUM BATTERY INCLUDING POSITIVE ELECTRODE**

(30) Priority: 03.04.2025 KR 20250043424
(71) Applicant: SAMSUNG SDI CO., LTD., Yongin-si, Gyeonggi-do 17084 (KR)
(72) Inventor: HWANG, Geun Mo, 16678 Suwon-si (KR); HWANG, Ki Wook, 16678 Suwon-si (KR); KIM, Seong Jong, 16678 Suwon-si (KR); CHO, Jin Il, 16678 Suwon-si (KR); LEE, Eun Gyeong, 16678 Suwon-si (KR); PARK, Min Su, 16678 Suwon-si (KR); SHIN, Dong Il, 16678 Suwon-si (KR)
(74) Representative: Michalski Hüttermann & Partner mbB

(57) **Abstract**

A conductive material dispersion for a rechargeable lithium battery includes carbon nanotubes as a conductive material and a mixture of a first dispersant and a second dispersant as a dispersant. The second dispersant is an alcohol having 1 to 5 carbon atoms in its main chain. The conductive material dispersion has a viscosity of 500 to 3000 cPs at 25 °C and a specific surface area (SSA) of 260,000 m²/kg or more.

## Description

### CROSS-REFERENCE TO RELATED APPLICATION

The present application claims priority and the benefit of Korean Patent Application No. 10-2025-0043424, filed on April 3, 2025, in the Korean Intellectual Property Office, the entire disclosure of which is incorporated herein by reference.

### BACKGROUND

### 1. Field of the Disclosure

The present disclosure relates to a conductive material dispersion for a rechargeable lithium battery, a positive electrode manufactured using the conductive material, and a rechargeable lithium battery including the positive electrode.

### 2. Discussion of Related Art

With the rapid spread of electronic devices, such as mobile phones, notebook computers, and electric vehicles, using batteries, the demand for secondary batteries having high energy density and high capacity has rapidly increased. Accordingly, there has been research and development for improving the performance of rechargeable lithium batteries.

A rechargeable lithium battery includes a positive electrode and a negative electrode that contain an active material capable of intercalation and deintercalation of lithium ions. A rechargeable lithium battery produces electric energy by oxidation and reduction reactions when the lithium ions are intercalated into and deintercalated from the positive electrode and the negative electrode.

### SUMMARY

An embodiment of the present disclosure is directed to providing a conductive material dispersion for a rechargeable lithium battery having appropriate viscosity and specific surface area (SSA) ranges.

Another embodiment is directed to providing a conductive material dispersion for a rechargeable lithium battery capable of providing a battery having low resistance.

Still another embodiment is directed to providing a conductive material dispersion for a rechargeable lithium battery, with the conductive material including a high concentration of carbon nanotubes and having improved conductivity.

According to yet another embodiment, there is provided a conductive material dispersion for a rechargeable lithium battery.

In some embodiments, a conductive material dispersion for a rechargeable lithium battery includes carbon nanotubes as a conductive material and a mixture of a first dispersant and a second dispersant as a dispersant, wherein the second dispersant is an alcohol having 1 to 5 carbon atoms in its main chain, and the conductive material dispersion has a viscosity of 500 cPs at 25 °C to 3000 cPs at 25 °C and a specific surface area (SSA) of 260,000 m²/kg or more.

The alcohol may be one or more of methyl alcohol, ethyl alcohol, n-propyl alcohol, isopropyl alcohol, n-butanol, isopropanol, and tert-butanol.

A weight ratio of the alcohol having 1 to 5 carbon atoms in its main chain to the conductive material may be 0.1 or more and less than 2.

The alcohol having 1 to 5 carbon atoms in its main chain may be included in the conductive material dispersion in an amount of 0.1 to 5 wt%.

The first dispersant may be a hydrogenated nitrile butadiene rubber-based dispersant.

The hydrogenated nitrile butadiene rubber-based dispersant may be included in an amount of 0.1 to 30 parts by weight based on 100 parts by weight of the carbon nanotubes.

The carbon nanotubes may have an average diameter of 5 nm to 25 nm and an average length of 200 µm or less.

The carbon nanotubes may have a specific surface area of 240 m²/g to 280 m²/g.

The mixture may be present in an amount of 0.6 to 5 wt%, based on a total of 100 wt% of the conductive material dispersion.

The alcohol may not include an amino group.

The conductive material dispersion may further include solvents.

The solvents may include an amide-based polar organic solvent.

The weight ratio of the solvents to the alcohol having 1 to 5 carbon atoms in its main chain in the conductive material dispersion may be 20:1 to 400:1.

According to another embodiment, there is provided a positive electrode for a rechargeable lithium battery. The positive electrode for a rechargeable lithium battery includes a positive electrode active material layer prepared using the conductive material dispersion for a rechargeable lithium battery.

According to still another embodiment, there is provided a rechargeable lithium battery. The rechargeable lithium battery includes the positive electrode for a rechargeable lithium battery and a negative electrode.

### BRIEF DESCRIPTION OF DRAWINGS

The drawings illustrate exemplary embodiments of the present disclosure and further describe aspects and features of the present disclosure together with the detailed description below. But the present disclosure is not limited to the embodiments set forth in the drawings.
FIGS. 1 to 4 show cross-sectional views of rechargeable lithium batteries according to embodiments of the present disclosure.
FIG. 5 shows an SEM (scanning electron microscope) photograph of the positive electrode made with the slurry of Example 4.
FIG. 6 shows an SEM photograph of the positive electrode made with the slurry of Comparative Example 1.

### DETAILED DESCRIPTION OF EXEMPLARY EMBODIMENTS

Hereinafter, embodiments of the present disclosure will be described in detail. However, as the embodiments are only examples, and the present disclosure is not limited to the expressly disclosed embodiments.

Unless otherwise specified herein, when a part such as a layer, film, region, plate, etc. is described as being "on" another part, it includes not only the case where the part is "directly on" the other part but also the case where there is still another part therebetween.

Unless otherwise specified in this specification, anything indicated in the singular may also include the plural. Further, unless otherwise stated, "A or B" may mean "including A, including B, or including A and B."

In this specification, the term "combination thereof" may mean a mixture, laminate, composite, copolymer, alloy, blend, and reaction product of the components.

In this specification, the terms "particle diameter D50," "D50 average size" and "D50 particle diameter" refer mean the diameter of particles with a cumulative volume of 50% by volume in the particle size distribution. The particle size distribution may be measured by methods well known to those skilled in the art. For example, the particle size distribution may be measured using a particle size analyzer, a transmission electron micrograph, or a scanning electron micrograph. In another method, a D50 value may be obtained by measuring the particle diameter using a measuring device using dynamic light scattering, performing data analysis to count the number of particles for each particle size range, and then calculating the particle diameter therefrom. Alternatively, the D50 value may be measured using a laser diffraction method. More specifically, when measuring by laser diffraction, after the particles to be measured are dispersed in a dispersion medium, the particles may be introduced into a commercially available laser diffraction particle diameter measuring apparatus (e.g., Microtrac MT 3000) and irradiated with ultrasonic waves of about 28 kHz at an output of 60 W, and the D50 based on 50% of the particle diameter distribution in the measurement apparatus may be calculated.

In this specification, "(meth)acrylic" refers to acrylic and/or methacrylic.

When describing a numerical range in this specification, 'X to Y' means X or more and Y or less (X ≤ and ≤ Y).

According to an embodiment, a conductive material dispersion for a rechargeable lithium battery has a viscosity of 500 cPs at 25 °C to 3000 cPs at 25 °C. When the viscosity of the dispersion is less than 500 cPs, the storage stability of the positive electrode slurry may deteriorate, which leadings to the problem the positive electrode slurry cannot be stored for a certain period of time or longer. When the viscosity of the dispersion exceeds 3000 cPs at 25 °C, the flowability of the positive electrode slurry may be reduced, which leads to a problem in that the slurry may not be uniformly coated. In some examples, the viscosity of the dispersion in cPs at 25 °C may be 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, or 3000 cPs, or 1000 to 2000 cPs.

A specific surface area (SSA) of the dispersion is 260,000 m²/kg or more. SSA is a standard for determining whether a positive electrode slurry prepared using a conductive material dispersion (which is prepared using carbon nanotubes described below) can provide low powder resistivity. Although the SSA of carbon nanotubes may be easily measured, it is difficult to measure the SSA of carbon nanotubes when they are dispersed in a conductive additive dispersion.

When the SSA of the dispersion is less than 260,000 m²/kg, there may be a problem in that the powder resistivity of the positive electrode slurry increases, resulting in a positive electrode having low conductivity. For example, the SSA of the dispersion may be 260,000 m²/kg to 300,000 m²/kg. The SSA of the conductive material dispersion may be obtained using a Malvern particle size analyzer. In this regard, reference is made to the methods described below.

To provide the above viscosity and SSA ranges, the conductive material dispersion includes a conductive material and a hydrogenated nitrile-butadiene-based dispersant as a dispersant. The conductive material dispersion additionally includes an alcohol having 1 to 5 carbon atoms in its main chain, and the ratio between the conductive material and the alcohol having 1 to 5 carbon atoms in its main chain is adjusted. That is, the conductive material dispersion includes, as dispersants, a hydrogenated nitrile-butadiene-based dispersant and an alcohol having 1 to 5 carbon atoms in its main chain, and the ratio between the conductive material and the alcohol having 1 to 5 carbon atoms in its main chain is adjusted. Hereinafter, the conductive material dispersion will be described in detail.

The conductive material dispersion includes carbon nanotubes as a conductive material and a mixture of a first dispersant and a second dispersant as a dispersant. The second dispersant is an alcohol having 1 to 5 carbon atoms in its main chain.

The carbon nanotube may have an average diameter of 5 nm to 25 nm, for example an average diameter in nm of 5, 6, 7, 8, 9, 10, 11, 12, 13, 14, 15, 16, 17, 18, 19, 20, 21, 22, 23, 24, or 25 nm, or 5 to 20 nm. Here, the "diameter of carbon nanotube" refers to the length of a minor axis perpendicular to a major axis. The diameter of the carbon nanotube can be determined using a scanning electron microscope (SEM). The average diameter of the carbon nanotubes may be obtained by measuring a portion of the conductive material dispersion using a SEM, obtaining multiple diameters of carbon nanotubes from the SEM, and then averaging the results. When the average diameter of the carbon nanotubes falls within the above ranges, the carbon nanotubes may impart conductivity to a large volume (area) using a small quantity.

The carbon nanotubes may have an average length of 200 µm or less, before example, 100 µm to 200 µm. When the average length of the carbon nanotubes is within this range, the electrolyte impregnability of an electrode made using the conductive material dispersion and ion mobility in a battery may be further improved while exhibiting appropriate conductivity. Here, the 'length' of carbon nanotube' refers to the length corresponding to the major axis. The length of the carbon nanotube can be determined using a SEM. The average length of the carbon nanotubes may be obtained by measuring a portion of the conductive material dispersion using a SEM, obtaining multiple lengths of carbon nanotubes from the SEM, and then averaging the results.

The carbon nanotubes may have a specific surface area of 240 m²/g to 280 m²/g. In this range, good conductivity may be provided. The specific surface area may be a BET (Brunauer-Emmett-Teller) specific surface area. The specific surface area may be measured by a gas adsorption method. For example, the BET specific surface area may be measured by using physical adsorption and chemical adsorption phenomena of nitrogen gas and a BET method using a Macsorb HM Model-1208 (MOUNTECH).

Based on a total of 100 wt% of the conductive material dispersion, the amount of the carbon nanotubes may be 0.4 to 5.0 wt%, for example 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0 wt%, 0.4 to 4.0 wt%, for example 1.0 to 4.0 wt%, for example 3.0 wt%. When the carbon nanotube content is within the above ranges, a conductive material dispersion exhibiting appropriate viscosity may be obtained. And, when a positive electrode is made using the conductive material dispersion, a positive electrode exhibiting excellent electrode plate characteristics may be made.

The carbon nanotubes may be single-walled carbon nanotubes, multi-walled carbon nanotubes, or a combination thereof. According to an embodiment, the carbon nanotubes may be multi-walled carbon nanotubes.

The conductive material dispersion includes a dispersant, and the dispersant includes a mixture of a first dispersant and a second dispersant. In one embodiment, the mixture of the first dispersant and the second dispersant may be included in the dispersion in an amount of at least 95 wt%, for example, 95 wt% to 100 wt% or 100 wt%.

The first dispersant may be a hydrogenated nitrile butadiene rubber-based dispersant. When a positive electrode is made using the dispersion, the hydrogenated nitrile butadiene rubber-based dispersant may have excellent compatibility with a binder for a positive electrode active material, such as polyvinylidene fluoride (PVDF). The hydrogenated nitrile butadiene rubber-based dispersant may be included in the conductive material dispersion in an amount of 0.1 to 3.0 wt%, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0 wt%, 0.1 to 1.0 wt%, or 0.5 to 1.0 wt%. In this range, it is possible to easily prepare a conductive material dispersion having the above-described SSA range.

Based on 100 parts by weight of the carbon nanotubes, the hydrogenated nitrile butadiene rubber-based dispersant may be included in an amount of 0.1 to 30 parts by weight, for example, 0.1, 1, 2, 3, 4, 5, 6, 7, 8, 9, 10, 11, 12, 13, 14, 15, 16, 17, 18, 19, 20, 21, 22, 23, 24,25, 26,27, 28, 29, 30 parts by weight, 0.1 to 25 parts by weight or 5 to 20 parts by weight. In this range, it is possible to easily prepare a conductive material dispersion that satisfies the above-described viscosity and SSA ranges.

The second dispersant may be an alcohol having 1 to 5 carbon atoms in its main chain. That is, in the conductive material, in addition to the hydrogenated nitrile butadiene rubber-based dispersant, an alcohol having 1 to 5 carbon atoms in its main chain is used as an additional dispersant.

A conductive material dispersion including only the hydrogenated nitrile butadiene rubber-based dispersant may have the problem in that the viscosity of the conductive material dispersion is very high. Further, it may be difficult to prepare a conductive material dispersion including the hydrogenated nitrile-butadiene rubber-based dispersant but including a dispersant other than an alcohol having 1 to 5 carbon atoms in its main chain as a dispersion that has the above-described viscosity and SSA ranges. In particular, when an additional dispersant other than the hydrogenated nitrile butadiene rubber-based dispersant is included in the conductive material dispersion in an amount of 0.1 to 5 wt%, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5 wt%, 0.1 to 3 wt%, the alcohol having 1 to 5 carbon atoms in its main chain may facilitate the preparation of a conductive material dispersion that has the above-described viscosity and SSA ranges.

Here, the "number of carbons in its main chain" refers to the number of carbons that make up the longest chain in the structure of the alcohol. The alcohol has 1 to 5 carbon atoms in its main chain. A conductive material dispersion including an alcohol having a main chain carbon number exceeding 5 as a dispersant may have an increased viscosity.

The alcohol may be a straight-chain or branched-chain alcohol having 1 to 5 carbon atoms in its main chain. The alcohol may be a monohydric alcohol having 1 to 5 carbon atoms in its main chain. For example, the alcohol may be a straight-chain or branched-chain alcohol having 1, 2, 3, 4, or 5 carbon atoms in its main chain. For example, the alcohol may be one or more of methyl alcohol, ethyl alcohol, n-propyl alcohol, isopropyl alcohol, n-butanol, isopropanol, and tert-butanol. Preferably, the alcohol may be one or more of ethyl alcohol, isopropyl alcohol, and tert-butanol. The alcohol may not have an amino group.

The weight ratio of the alcohol having 1 to 5 carbon atoms in its main chain to the conductive material may be 0.1 or more and less than 2. In this range, it is possible to easily prepare a conductive material dispersion that has the above-described viscosity and SSA ranges, and the resistance of the battery may be lowered by significantly lowering the powder resistivity of the slurry prepared with the conductive material dispersion. For example, the weight ratio may be 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 0.1 to 1.5, or 0.1 to 1.

In embodiments, the alcohol having 1 to 5 carbon atoms in its main chain may be included in the conductive material dispersion in an amount of 0.1 to 5 wt%, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5 wt%, 0.1 to 3 wt%, 0.3 to 2 wt%, or 0.3 to 1.5 wt%. In these ranges, it is possible to easily prepare a conductive material dispersion having the above-described SSA range.

Based on a total of 100 wt% of the conductive material dispersion, the dispersant, that is, the mixture of the first dispersant and the second dispersant, may be present in an amount of 0.6 to 5 wt%, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5 wt%, or 0.6 to 4 wt%.

The hydrogenated nitrile butadiene rubber-based dispersant and the alcohol having 1 to 5 carbon atoms in its main chain may be included in the mixture in a weight ratio of 1:0.1 to 1:10, for example, 1:0.1, 1:0.5, 1:1, 1:1.5, 1:2, 1:2.5, 1:3, 1:3..5, 1:4, 1:4.5, 1:5, 1:5.5, 1:6, 1:6.5, 1:7, 1:7.5, 1:8, 1:8.5, 1:9, 1:9.5, 1:10, 1:0.1 to 1:5, or 1:0.5 to 1:5. In these ranges, it is possible to easily prepare a conductive material dispersion having the above-described viscosity and SSA ranges by primary dispersion and secondary dispersion.

The conductive material dispersion may include water or one or more solvents. The solvents include an amide-based organic solvents (for example, an amide-based polar organic solvents) such as dimethylformamide, diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, and octanol; glycols such as ethylene glycol, diethylene glycol, triethylene glycol, propylene glycol, 1,3-propanediol, 1,3-butanediol, 1,5-pentanediol, and hexylene glycol; polyhydric alcohols such as glycerin, trimethylolpropane, pentaerythritol, and sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether; ketones such as acetone, methyl ethyl ketone, methyl propyl ketone, and cyclopentanone; and esters such as ethyl acetate, γ-butyl lactone, and ε-propiolactone; and any one or a mixture of two or more thereof.

Preferably, the conductive material dispersion may be used in the manufacture of the positive electrode, and the solvent may be an amide-based polar organic solvent such as N-methyl pyrrolidone (NMP) or a mixture of NMP and water.

In an embodiment, the weight ratio of the solvents such as the amide-based organic solvents (such as the N-methyl pyrrolidone) to the alcohol having 1 to 5 carbon atoms in its main chain in the conductive material dispersion may be 20:1 to 400:1, for example, 20:1, 30:1, 40:1, 50:1, 60:1, 70:1, 80:1, 90:1, 100:1, 110:1, 120:1, 130:1, 140:1, 150:1, 160:1, 170:1, 180:1, 190:1, 200:1, 210:1, 220:1, 230:1, 240:1, 250:1, 260:1, 270:1, 280:1, 290:1, 300:1, 310:1, 320:1, 330:1, 340:1, 350: 1, or 20:1 to 350:1. In these ranges, it is possible to easily prepare a dispersion that has the above-described viscosity and SSA ranges.

Next, a method of preparing the conductive material dispersion is described.

The method may include a step of preparing a pre-dispersion solution by mixing carbon nanotubes, the solvent, the first dispersant, and the second dispersant. Then, primary dispersion and secondary dispersion are sequentially performed on the prepared pre-dispersion solution to prepare a conductive material dispersion. Here, the primary dispersion involves dispersing the pre-dispersion solution at 5,000 rpm to 10,000 rpm, for example, 5,000 rpm to 9,000 rpm, for 60 minutes to 120 minutes. The secondary dispersion involves performing 10 to 30 pass treatments at a pressure of 1,000 bar to 2,000 bar, for example, 1,000 bar to 1,500 bar. In the above primary and secondary dispersion ranges, it is possible to easily prepare a conductive material dispersion that has the above-described viscosity and SSA ranges.

### Positive electrode for rechargeable lithium battery

According to embodiments, the positive electrode for a rechargeable lithium battery includes a positive electrode active material layer, the positive electrode active material layer includes a positive electrode active material and a conductive material, and the conductive material may be derived from the conductive material dispersion described above.

The positive electrode active material layer may be prepared using a positive electrode slurry including a positive electrode active material and the conductive material dispersion for a rechargeable lithium battery. The positive electrode can have high conductivity by including the positive electrode active material layer prepared using the conductive material dispersion described above.

The positive electrode for a rechargeable lithium battery may include a current collector and a positive electrode active material layer formed on the current collector. The positive electrode active material layer includes the positive electrode active material and the conductive material, and the positive electrode active material layer may further include a binder. For example, the positive electrode may further include an additive that functions as a sacrificial positive electrode. The conductive material may be derived from the conductive material dispersion for a rechargeable lithium battery.

Aluminum may be used as the collector, but the present disclosure is not limited thereto.

The positive electrode slurry includes the conductive material dispersion for a rechargeable lithium battery and the positive electrode active material, and the positive electrode slurry may further include a binder.

The positive electrode active material may include a compound (e.g., a lithiated intercalation compound) that is capable of intercalating and deintercalating lithium. In an embodiment, at least one of a composite oxide of lithium and a metal selected from cobalt, manganese, nickel, and combinations thereof may be used.

The composite oxide may be a lithium transition metal composite oxide. Examples of the composite oxide include lithium nickel-based oxide, lithium cobalt-based oxide, lithium manganese-based oxide, lithium iron phosphate-based compound, cobalt-free nickel-manganese-based oxide, or a combination thereof. As examples, compounds represented by any of the following chemical formulas may be used: LiₐA_{1-b}X_{b}O_{2-c}D_{c} (0.90≤a≤1.8, 0≤b≤0.5, and 0≤c≤ 0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a ≤1.8, 0≤b≤0.5, 0≤c≤0.5, and 0<α<2); LiₐNi_{1-b-c}Mn_{d}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{d}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8). In these
chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be a high-nickel positive electrode active material. Based on 100 mol% of the metal excluding lithium in the lithium-transition metal composite oxide, the positive electrode active material may have a nickel content is 80 mol% or more, 85 mol% or more, 90 mol% or more, 91 mol% or more, or 94 mol% or more, and 99 mol% or less. The high-nickel positive electrode active material can provide high capacity and can be used in high-capacity, high-density lithium secondary batteries.

In an embodiment, the positive electrode active material may be a lithium nickel cobalt aluminum (NCA)-based oxide.

The amount of the positive electrode active material may be included in an amount of 90 wt% to 99.5 wt% of 100 wt% based on the solid content of the positive electrode slurry.

The binder may attach the positive electrode active material particles to each other and also attach the positive electrode active material to the current collector. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples. In embodiments, the amount of the binder may be 0.5 to 5 wt% based on the solid content of 100 wt% of the positive electrode slurry.

The conductive material may be derived from the conductive material dispersion for lithium secondary batteries described above. In embodiments, the conductive material may be 0.5 wt% to 5 wt% based on the solid content of 100 wt% of the positive electrode slurry.

### Rechargeable lithium battery

According embodiments, the rechargeable lithium battery includes a positive electrode and a negative electrode. The positive electrode may be as described above.

### Negative electrode

The negative electrode for a rechargeable lithium battery may include a current collector and a negative electrode active material layer on the current collector. The negative electrode active material layer may include a negative electrode active material and may further include a binder and/or a conductive material (e.g., an electrically conductive material). In embodiments, for example, the negative electrode active material layer may include about 90 wt% to about 99 wt% of the negative electrode active material, about 0.5 wt% to about 5 wt% of the binder, and about 0 wt% to about 5 wt% of the conductive material.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material such as crystalline carbon, amorphous carbon or a combination thereof. The crystalline carbon may be graphite, such as non-shaped, sheet-shaped, flake-shaped, sphere-shaped, or fiber-shaped, natural graphite or artificial graphite. The amorphous carbon may be a soft carbon, a hard carbon, a mesophase pitch carbonization product, calcined coke, and the like.

In an embodiment, the lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy or a combination thereof. In the formula Si-Q, Q is selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may include Sn, SnO₂, a Sn-based alloy, or a combination thereof.

The silicon-carbon composite may be a composite of silicon and amorphous carbon. In some embodiments, the silicon-carbon composite may be in a form of silicon particles with amorphous carbon coated on the surfaces of the silicon particles. For example, the silicon-carbon composite may include secondary particles (core) in which primary silicon particles are assembled, and amorphous carbon coating layers (shell) on the surfaces of the secondary particles. The amorphous carbon may also be between the primary silicon particles, for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, with an amorphous carbon coating layer on a surface of the core.

The Si-based negative electrode active material may be used alone or the Sn-based negative electrode active material may be used in combination with a carbon-based negative electrode active material.

The binder may attach the negative electrode active material particles to each other and also attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

If an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. In an embodiment, the alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any suitable material that does not cause an undesirable chemical change in the rechargeable lithium battery and that conducts electrons can be used. Non-limiting examples of the conductive material include a carbon-based material, such as natural graphite, artificial graphite, carbon black, acetylene black, Ketjen black, a carbon fiber, a carbon nanofiber, and a carbon nanotube; a metal-based material including copper, nickel, aluminum, silver, etc. in a form of a metal powder or a metal fiber; a conductive polymer, such as a polyphenylene derivative; or a mixture thereof.

In some embodiments, the negative current collector may include a copper foil, a nickel foil, a stainless steel foil, a titanium foil, a nickel foam, a copper foam, a polymer substrate coated with a conductive metal, or a combination thereof.

### Separator

Depending on a type of the rechargeable lithium battery, a separator may be present between the positive electrode and the negative electrode. The separator may include any of polyethylene, polypropylene, polyvinylidene fluoride, or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both, or opposite, surfaces of the porous substrate.

The porous substrate may be a polymer film formed of any of a polymer polyolefin, such as polyethylene and polypropylene, polyester, such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON^{®}), or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer. In other embodiment, a coating layer including an organic material and a coating layer including an inorganic material may be stacked.

### Electrolyte Solution

The electrolyte solution for a rechargeable lithium battery may include a non-aqueous organic solvent and a lithium salt.

The non-aqueous organic solvent may function as a medium for transmitting ions taking part in the electrochemical reaction of a battery.

In an embodiment, the non-aqueous organic solvent may be a carbonate-based, ester-based, ether-based, ketone-based, or alcohol-based solvent, an aprotic solvent, or a combination thereof.

The carbonate-based solvent may include any of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

The ether-based solvent may include any of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include any of ethanol, isopropyl alcohol, and the like, and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more.

In an embodiment, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be cylindrical, prismatic, pouch, or coin-type, and the like depending on its shape.

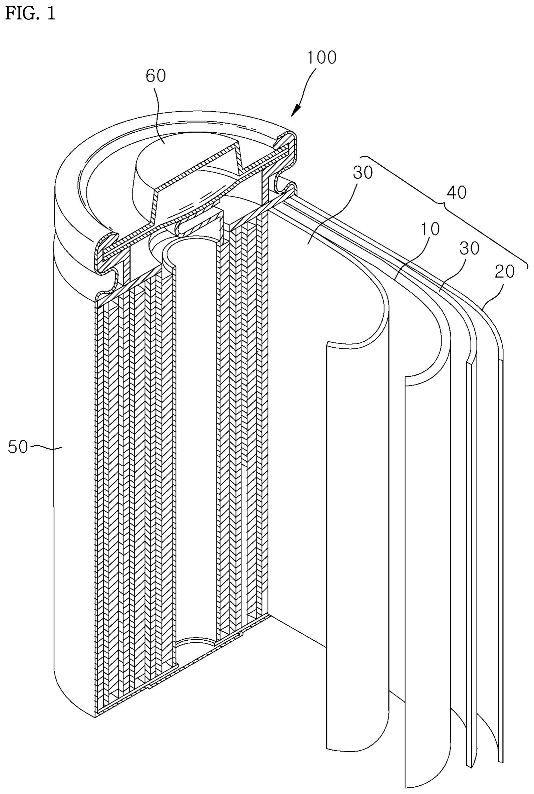

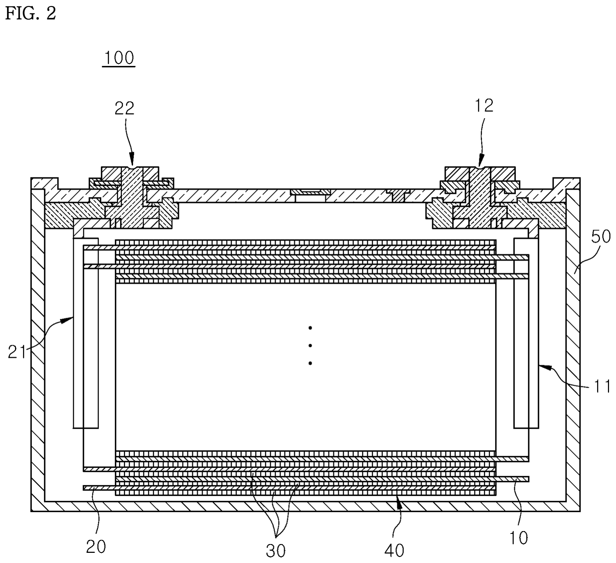

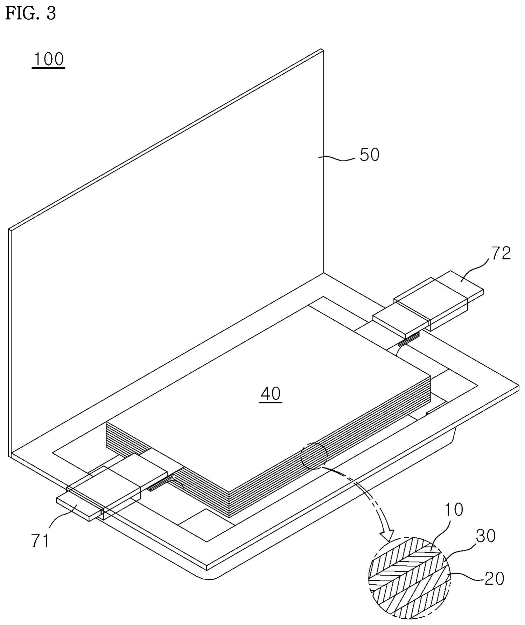

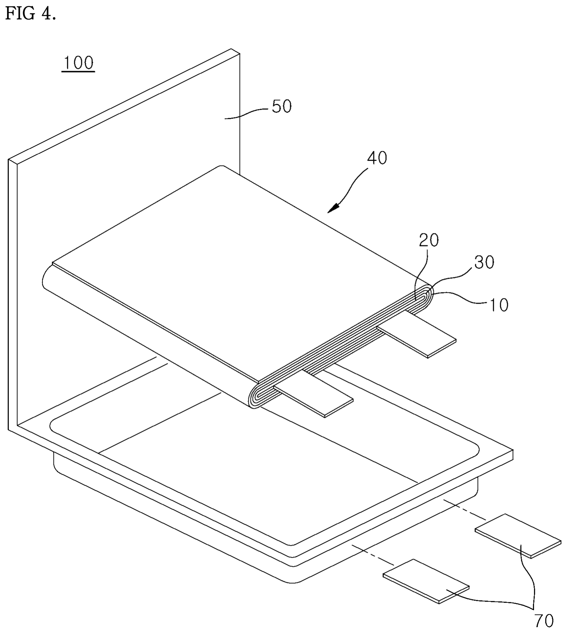

FIGS. 1 to 4 are schematic views illustrating rechargeable lithium batteries according to embodiments. FIG. 1 shows a cylindrical battery, FIG. 2 shows a prismatic battery, and FIGS. 3 and 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 1. As shown in FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 may include an electrode tab 70, which may be, for example, a positive electrode tab 71 and a negative electrode tab 72 to function as an electrical path for inducing the current formed in the electrode assembly 40 to outside of the battery.

The rechargeable lithium battery according to an embodiment may be used in automobiles, mobile phones, and/or various types of electric devices, as non-limiting examples.

Hereinafter, examples and comparative examples of the present disclosure will be described. However, the following examples are only examples of the present disclosure, and the present disclosure is not limited to the following examples.

### Example 1

### (1) Preparation of conductive material dispersion

The conductive material used was multi-walled carbon nanotubes having a specific surface area of 240 to 280 m²/g, an average length of 150 µm, and an average diameter: 7 nm to 12 nm.

60 g of the multi-walled carbon nanotubes, 30 g of ethyl alcohol as a second dispersant, 150 g of a first dispersant-containing solution (including hydrogenated nitrile butadiene rubber (H-NBR) as a first dispersant, a content of H-NBR : 8 wt%, and N-methyl-2-pyrrolidone (NMP) as a solvent), and 1,760 g of N-methyl-2-pyrrolidone (NMP) as a solvent were mixed to prepare a solution having a total weight of 2,000 g.

The solution was added to a stainless steel container and stirred for 120 minutes at 8000 rpm using a high shear mixer (Silverson Machines Ltd.) equipped with a square-hole high shear screen. Then, a pipe was connected to the stainless steel container, the solution was supplied to a high-pressure disperser, and the solution was dispersed in a circulating manner at 1300 bar for 60 minutes to produce a conductive material dispersion. A single nozzle chamber was used for the dispersion treatment.

### (2) Manufacture of positive electrode

98.5 wt% of lithium nickel cobalt manganese oxide (LiNi_{0.8}Co_{0.1}Mn_{0.1}O₂) (ECOPRO) as a positive electrode active material, the conductive material dispersion sufficient to provide 1.0 wt% of carbon nanotubes as a solid content, and 0.5 wt% of polyvinylidene fluoride (Solvay S.A.) as a binder were mixed, N-methyl-2-pyrrolidone was added thereto, and then the mixture was stirred for 30 minutes using a mechanical stirrer to prepare a positive electrode slurry. The prepared positive electrode slurry was applied to an aluminum foil and dried at 120 °C for 12 hours to make a positive electrode.

### Examples 2 to 5

Conductive material dispersions and positive electrodes were made in the same manner as in Example 1, except that the content of each component in the conductive material dispersion was as shown in Table 1 below.

### Comparative Examples 1 to 6

Conductive material dispersions and positive electrodes were made in the same manner as in Example 1, except that the content of each component in the conductive material dispersion was as shown in Table 1 below.

The following physical properties were evaluated for the prepared conductive material dispersions, positive electrode slurries, and positive electrodes.
(1) Powder resistivity of positive electrode slurry (Ω·cm): A positive electrode slurry was prepared according to each of the examples and comparative examples. Each of the prepared positive electrode slurry was applied onto aluminum foil and dried at 120 °C for 12 hours. Then, a positive electrode active material layer was separated from each of the aluminum foils and pulverized into a powder using a mortar and pestle to prepare a positive electrode slurry powder. The powder resistivity of the prepared positive electrode slurry was measured using an APRMS-25C powder resistivity meter from Dasol Engineering Co., Ltd.
(2) Viscosity of conductive material dispersion (cPs): The conductive material dispersions of the examples and comparative examples were cooled at room temperature (25 °C) for 1 hour, and then the viscosity was measured at a shear rate of 10/sec at 25 °C using a viscosity meter (a rheometer from Anton Paar Korea Ltd.).
(3) SSA of conductive material dispersion (m²/kg): Samples were prepared by diluting the conductive material dispersions of the examples and comparative examples by adding N-methyl-2-pyrrolidone such that the transmittance of a red laser diode was 60% to 80%. The SSAs of the prepared samples were measured using a Mastersize 3000 particle size analyzer (Malvern). The operating conditions for circulation and ultrasonication were set as follows: a circulation speed of 10 m/s, an ultrasonic intensity of 500 Hz, an ultrasonication time of 1 minute, a stirring speed of 500 rpm, and a continuous stirring mode. During air discharge, the ultrasonic intensity was set to 2000 Hz and the ultrasonication time was set to 5 seconds. When calculating the SSA, the refractive index of N-methyl-2-pyrrolidone was calculated to be 1.47, and the refractive index of multi-walled carbon nanotubes was calculated to be 2.5.
(4) Measurement of direct current internal resistance (DC-IR) (mΩ)

Positive electrodes were made according to the examples and comparative examples. 96 wt% of graphite as a negative electrode active material, 2 wt% of Ketjen black as a conductive material, and 2 wt% of polyvinylidene fluoride as a binder were mixed in distilled water to prepare a negative electrode slurry, and the prepared negative electrode slurry was applied onto a copper foil, dried, and rolled to make negative electrodes.

1.5 M LiPF₆ was added to a mixed solvent of ethylene carbonate, ethyl methyl carbonate, and dimethyl carbonate (volume ratio 2:1:7), and to 100 wt% of the resulting mixture, 10 wt% of fluoroethylene carbonate, 0.2 wt% of LiBF₄, 1 wt% of lithium bisoxalate borate, 1.5 wt% of LiPO₂F₂, 0.1 wt% of LiSO₃F, and 1 wt% of succinonitrile were added to prepare an electrolyte for a rechargeable lithium battery.

Conventional rechargeable lithium battery were made using the positive electrodes, negative electrodes, and electrolytes. The electrolyte injection amount was 5.8 g. Each of the rechargeable batteries was subjected to the formation process twice at 0.2 C, and the voltage drop was recorded while discharging to 50% SOC (state of charge, a state in which the discharge capacity becomes 50% when the total charge capacity of the battery is 100% when the battery was charged/discharged at 4.2 V), and the resistance value of the rechargeable battery was calculated using Ohm's Law (V=IR).

### (5) Cross-section of positive electrode

The cross-section of the positive electrode was confirmed using a SEM.

**Table 1**

| | Conductive material | Second dispersant | | First dispersant |
|---|---|---|---|---|
| | CNT (g) | Type | Content (g) | H-NBR solution (g) |
| Example 1 | 60 | Ethyl alcohol | 30 | 150 |
| Example 2 | 60 | Isopropyl alcohol | 30 | 150 |
| Example 3 | 60 | Tert-butanol | 6 | 150 |
| Example 4 | 60 | Tert-butanol | 30 | 150 |
| Example 5 | 60 | Tert-butanol | 60 | 150 |
| Comparative Example 1 | 60 | Lactic acid | 30 | 150 |
| Comparative Example 2 | 60 | Salicylic acid | 30 | 150 |
| Comparative Example 3 | 60 | 2-Methyl-2-aminopropanol | 30 | 150 |
| Comparative Example 4 | 60 | Poly(ethylene oxide) | 30 | 150 |
| Comparative Example 5 | 60 | Tert-butanol | 120 | 150 |
| Comparative Example 6 | 60 | Tert-butanol | 3 | 150 |

**(Table 1 continued)**

| | Solvent | Ratio* | Powder resistivity | Dispersion | | DC resistance |
|---|---|---|---|---|---|---|
| | NMP (g) | | | Viscosity | SSA | |
| Example 1 | 1760 | 0.5 | 11.24 | 1806 | 273400 | 30.4 |
| Example 2 | 1760 | 0.5 | 10.85 | 1564 | 275700 | 25.8 |
| Example 3 | 1784 | 0.1 | 10.71 | 1187 | 286100 | 23.4 |
| Example 4 | 1760 | 0.5 | 10.68 | 1495 | 286800 | 22.7 |
| Example 5 | 1730 | 1 | 11.68 | 1938 | 289400 | 21.2 |
| Comparative Example 1 | 1760 | 0.5 | 19.46 | 3922 | 146000 | 34.2 |
| Comparative Example 2 | 1760 | 0.5 | 34.73 | 826 | 264200 | 50.6 |
| Comparative Example 3 | 1760 | 0.5 | 16.44 | 199 | 278400 | 41.5 |
| Comparative Example 4 | 1760 | 0.5 | 35.12 | 4153 | 132900 | 49.6 |
| Comparative Example 5 | 1670 | 2 | 24.31 | 3124 | 171700 | 21.1 |
| Comparative Example 6 | 1787 | 0.05 | 19.71 | 964 | 128100 | 23.7 |

| | | | | | | |
|---|---|---|---|---|---|---|
| *Ratio is a weight ratio of second dispersant to conductive material | | | | | | |

As shown in Table 1, the conductive material dispersions of the examples had the viscosity and SSA ranges according to embodiments of the present disclosure. Therefore, it is expected that the conductive material dispersions of the examples can provide improved storage stability of the slurry and ease of slurry coating. In addition, the powder resistivity of the conductive material dispersions of the examples was lower than that of the comparative examples.

As also shown in Table 1 above, the conductive material dispersions of the comparative examples are expected to have insufficient storage stability or poor coatability of the slurry due to excessively high or low viscosity. Additionally, the powder resistivity of the comparative examples was inferior to that of the examples.

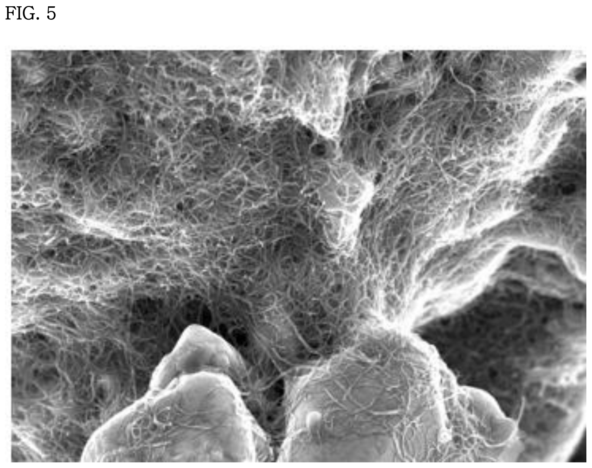

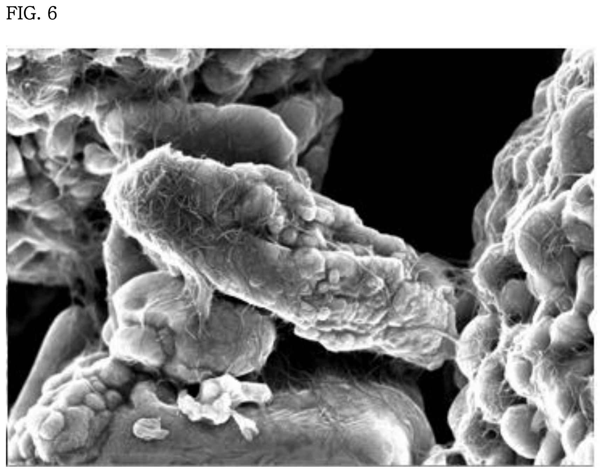

FIG. 5 shows an SEM photograph of the positive electrode made with the slurry of Example 4, and FIG. 6 shows an SEM photograph of the positive electrode made with the slurry of Comparative Example 1. Referring to FIG. 5, it can seen that many carbon nanotubes are distributed around the positive electrode active material. Referring to FIG. 6, it can be seen that relatively few carbon nanotubes are distributed around the positive electrode active material.

According to an embodiment, a conductive material dispersion for a rechargeable lithium battery is provided that has an viscosity range for improving the storage stability of the slurry and facilitating the coating of the slurry, and the conductive material dispersion provides an SSA range for reducing the resistance of a battery.

According to an embodiment, a conductive material dispersion for a rechargeable lithium battery provides improved capacity and long life of a battery by having low resistance.

Although the preferred embodiments of the present disclosure have been described above, the present disclosure is not limited thereto, and various modifications may be made.

## Claims

1. A conductive material dispersion for a rechargeable lithium battery (100), the conductive material dispersion comprising:
carbon nanotubes as a conductive material and a mixture of a first dispersant and a second dispersant as a dispersant,
wherein the second dispersant is an alcohol having 1 to 5 carbon atoms in its main chain, and
wherein the conductive material dispersion has a viscosity of 500 cPs at 25 °C to 3000 cPs at 25 °C and a specific surface area of 260,000 m²/kg or more.

2. The conductive material dispersion of claim 1, wherein the alcohol is one or more of methyl alcohol, ethyl alcohol, n-propyl alcohol, isopropyl alcohol, n-butanol, isopropanol, and tert-butanol.

3. The conductive material dispersion of claim 1 or 2, wherein a weight ratio of the alcohol having 1 to 5 carbon atoms in its main chain to the conductive material is 0.1 or more and less than 2.

4. The conductive material dispersion according to any one of claims 1 to 3, wherein the alcohol having 1 to 5 carbon atoms in its main chain is included in the conductive material dispersion in an amount of 0.1 wt% to 5 wt%.

5. The conductive material dispersion according to any one of claims 1 to 4, wherein the first dispersant is a hydrogenated nitrile butadiene rubber-based dispersant.

6. The conductive material dispersion according to any one of claims 1 to 5, wherein the first dispersant is a hydrogenated nitrile butadiene rubber-based dispersant, and wherein the hydrogenated nitrile butadiene rubber-based dispersant is included in an amount of 0.1 to 30 parts by weight based on 100 parts by weight of the carbon nanotubes.

7. The conductive material dispersion according to any one of claims 1 to 6, wherein the carbon nanotubes have an average diameter of 5 nm to 25 nm and an average length of 200 µm or less.

8. The conductive material dispersion according to any one of claims 1 to 7, wherein the carbon nanotubes have a specific surface area of 240 m²/g to 280 m²/g.

9. The conductive material dispersion according to any one of claims 1 to 8, wherein the mixture is present in an amount of 0.6 to 5 wt% based on a total of 100 wt% of the conductive material dispersion.

10. The conductive material dispersion according to any one of claims 1 to 9, wherein the alcohol does not include an amino group.

11. The conductive material dispersion according to any one of claims 1 to 10, wherein the conductive material dispersion further includes solvents.

12. The conductive material dispersion according to any one of claims 1 to 11, wherein the conductive material dispersion further includes solvent, and wherein the solvents include an amide-based polar organic solvent.

13. The conductive material dispersion of claim 11 or 12, wherein the weight ratio of the solvents to the alcohol having 1 to 5 carbon atoms in its main chain in the conductive material dispersion is 20: 1 to 400: 1.

14. A positive electrode (10) for a rechargeable lithium battery (100), the positive electrode (10) comprising a positive electrode active material layer prepared using the conductive material dispersion for a rechargeable lithium battery (100) according to any one of claims 1 to 13.

15. A rechargeable lithium battery (100) comprising the positive electrode (10) for a rechargeable lithium battery (100) of claim 14.
